# EUROPEAN PATENT APPLICATION

(11) **EP 1 437 883 A1**
(43) Date of publication of application: **14.07.2004**
(21) Application number: 03104500.8
(22) Date of filing: 02.12.2003
(51) Int. Cl.: H04N 1/40

(54) **Method for generating a screened representation of an image**

(30) Priority: 05.12.2002 EP 02102684
(71) Applicant: AGFA-GEVAERT, 2640 Mortsel (BE)
(72) Inventor: Bartels, Rudolf, c/o AGFA-GEVAERT, 2640 Mortsel (BE)

(57) **Abstract**

A method for generating a screened representation of an image, the method including (a) generating a first dot (11) of the screened representation, wherein the first dot (11) has a first dot size of at least two microdots; (b) repeating the dot generation until a first number of the first dots (11) are generated, arranged in a frequency modulated pattern; (c) selecting a second number of second dots (12) out of the first dots (11) and (d) enlarging the second dots (12) by adding one or more microdots (13) to each of the second dots (12).

## Description

### FIELD OF THE INVENTION

The present invention relates to the halftoning of continuous tone images for use in reproduction of such images.

### BACKGROUND OF THE INVENTION

Many reproduction devices are not capable of reproducing a continuous range of tones. For example, offset printing or inkjet printing methods can either deposit ink or not. Several techniques have been developed to simulate continuous tones on such devices. These simulated continuous tones are called halftones. The process that is used to obtain halftones is called screening. Screening breaks an image down into a series of dots. Varying the dot sizes, the number of dots, or both, approximates shades of color. The eye is not able to see the individual halftone dots, and only sees the corresponding "spatially integrated" density value. In a black-and-white printed image, for example, a group of large dots placed closely together appears black. A group of smaller dots with larger spaces between them produces a weaker, gray shade. A group of even smaller dots spaced widely apart appears almost white.

In traditional graphic arts, screening was generally done using a screen-like pattern etched into a glass plate. A camera operator had several of these plates, each with a different pattern. The image to be reproduced was projected through a chosen screen onto film, and the resulting image looked like the original except that it was broken down into a lot of little dots.

Imagesetters (and platesetters) create an electronic version of the traditional halftone screen. Screening software in the imagesetter applies an electronic dot pattern to the electronic image. In electronic screening, the halftone dots are made up of several microdots; a microdot is the smallest unit that can be addressed by the imagesetter.

Two major classes of screening methods are known: AM screening (Amplitude Modulated screening) and FM screening (Frequency Modulated screening). In AM screening, the halftone dots, that together will give the impression of a particular tone, are arranged on a fixed geometric grid. By varying the size of the halftone dots, the different tones of images can be simulated. AM screening is also called dot-size modulation screening or dot-clustered screening. In FM screening, the distance between the halftone dots is modulated rather then their size. FM screening is also called stochastic screening or dot-dispersed screening. Agfa's CristalRaster is an example of FM screening, while Agfa Balanced Screening (ABS) is an AM screening technology. More information on AM and FM screening can be found in **EP-A-0 639 023**.

Many FM screening methods reproduce the midtones of an image with poorer quality, due to effects such as graininess and uncontrolled dot clustering. There is thus a need for an improved screening method.

### SUMMARY OF THE INVENTION

The present invention is a method for generating a screened representation of an image as claimed in independent claim 1. Preferred embodiments of the invention are set out in the dependent claims. Preferably, a method in accordance with the invention is implemented by a computer program as claimed in claim 9. The invention also includes a printing plate as claimed in claim 6.

A screening method in accordance with the invention is partially FM and partially AM. In a preferred embodiment, FM screening is applied to the highlights and the shadows, while AM screening is applied to the midtones. For the highlights, FM dots are generated. In the midtones, these FM dots are enlarged by adding one or more microdots to them, i.e. the dots "grow" - which is AM screening. In the shadows, remaining "holes" between the dots are removed - which is FM screening again.

An advantage of a method in accordance with the invention is that clustering of dots in the midtones is more controllable, resulting in a higher perceived quality of the printed image in the midtones. Another advantage is that, depending on the design of the writing heads of some imagers, some severe banding is avoided.

Further advantages and embodiments of the present invention will become apparent from the following description and drawings.

### BRIEF DESCRIPTION OF THE DRAWINGS

The invention is described with reference to the following drawings without the intention to limit the invention thereto, and in which:
Figs. 1A to 1F show an embodiment in accordance with the invention;
Fig. 2 shows a detail of another embodiment in accordance with the invention;
Fig. 3 shows how density varies for yet another embodiment in accordance with the invention;
Fig. 4 shows how density varies for the embodiment illustrated by Figs. 1A to 1F;
Fig. 5 shows still another embodiment in accordance with the invention;
Fig. 6 shows a prior art embodiment.

### DETAILED DESCRIPTION OF THE INVENTION

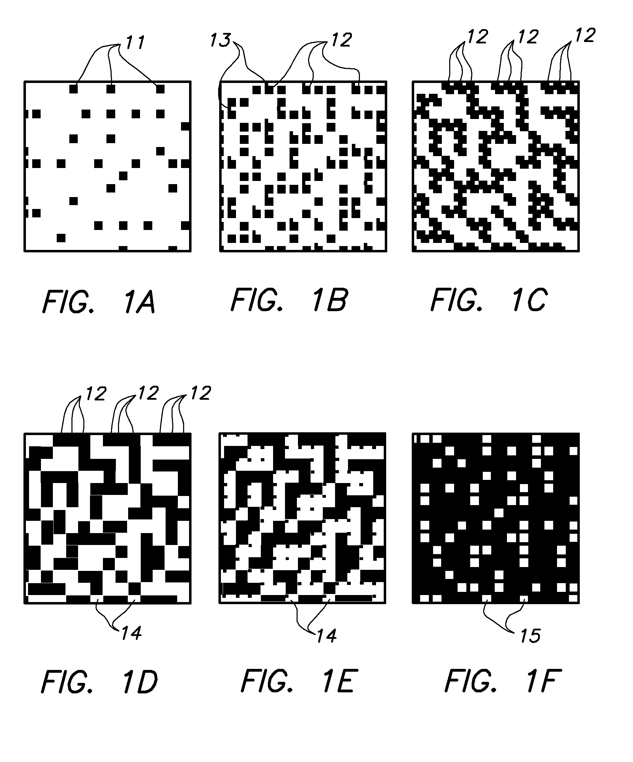

A preferred embodiment of the invention is illustrated by Figs. 1A - 1F. These drawings show dot patterns for six increasing densities, from highlights (Fig. 1A) to shadows (Fig. 1F). Fig. 1A shows a number of first dots 11, arranged in a frequency modulated pattern. This frequency modulated pattern may be obtained by means of a randomized Bayer matrix, as disclosed in **EP-A-0 642 259** and as used in Agfa's CristalRaster. The first dots 11 all have a first dot size. With increasing density, more first dots 11, having this first dot size, may be added to those shown in Fig. 1A. With still further increasing density, as shown in Fig. 1B, a number of second dots 12, selected out of the first dots 11, are enlarged by adding one or more microdots 13 to these second dots 12. The number of second dots 12 is at most equal to, i.e. is smaller than or equal to, the number of first dots 11 (remark: in order to keep the drawings readable, only some of the first dots 11, second dots 12 and microdots 13 are indicated by reference signs in Figs. 1A - 1F). Figs. 1A and 1B illustrate a first embodiment of the invention, wherein first FM screening is applied (see Fig. 1A) and then AM (Fig. 1B). In Fig. 1C the second dots 12 grow further by the addition of microdots. In Fig. 1D, which illustrates a second embodiment of the invention, all the second dots 12 have grown from the first dot size (of the first dots 11 in Fig. 1A) to a second dot size. Shown in Fig. 1D is a second dot size of 3x3 = 9 microdots, while Figs. 1A - 1C show a first dot size of 2x2 = 4 microdots. The location of the dots is determined as follows. First a randomized Bayer matrix is generated; this matrix is subdivided into a plurality of parcels; the parcels themselves may be subdivided again, in a number of steps as disclosed in **EP-A-0 642 259** cited already above, until the finally obtained parcels have a parcel size equal to the second dot size, i.e. of 3x3 microdots. In fact, in Fig. 1A, the first dots 11 having a first dot size of 2x2 microdots are generated in a 3x3 CristalRaster screen. With increasing density, these dots then gradually grow, and all have a second dot size equal to the parcel size of 3x3 microdots in Fig. 1D. In Fig. 1D, the microdots that are not turned on, i.e. that are not black, can be regarded as white "holes" 14. These holes 14 have a size equal to the second dot size, i.e. 3x3 microdots, in Fig. 1D. With further increasing density, from Fig. 1D to Fig. 1F, the size of the holes 14 is gradually decreased, from a size equal to the second dot size of 3x3 microdots in Fig. 1D to a size equal to the first dot size of 2x2 microdots in Fig. 1F, by gradually turning on microdots in the holes, as shown in Fig. 1E. In Fig. 1F, the remaining holes 15 have a size of 2x2 microdots; moreover, some of the holes were already removed completely in Fig. 1F to increase density still further.

The invention is not limited to the embodiment discussed above. In Figs. 1A - 1F, the dots grow from a size of 2x2 microdots to a size of 3x3 microdots, but of course other dot sizes may be used, such as 1x1, 2x3, 2x1, etc. Moreover, instead of generating the location of the dots according to a randomized Bayer matrix, any mask-based FM screening method that makes use of a threshold mask array may be applied. Besides methods based on the Bayer matrix, the so-called blue noise mask method (disclosed in **US-A-5 111 310**) is an example of a mask-based FM screening method. The threshold mask array is then subdivided into a plurality of parcels, as discussed above.

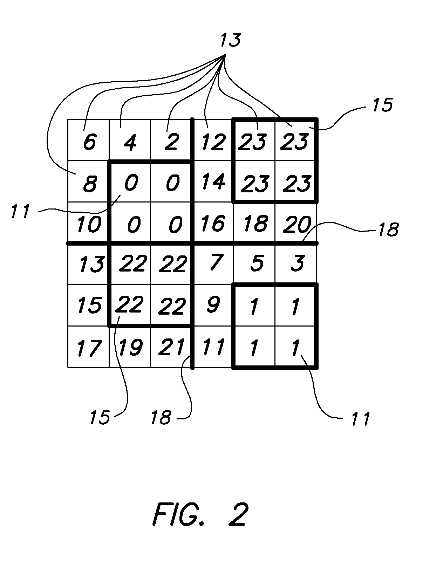

Fig. 2 illustrates in detail a way of gradually increasing the dot size, and decreasing the hole size. To simplify things, a square of only 9x9 microdots 13 is shown; in reality, a threshold mask array will usually comprise many more microdots, e.g. 512x512 microdots. In Fig. 2, each of the microdots 13 of the square of 9x9 microdots 13 has a number inside. These numbers inside the microdots are not reference signs; they indicate the sequence wherein the microdots are added, i.e. turned on, as explained below. The square of 9x9 microdots is divided by lines 18 into four adjacent dots having a dot size of 3x3 microdots. The microdots are turned on according to the following sequence. First, the four microdots with number 0 are turned on, and then the four microdots with number 1, so that two dots 11, called first dots 11 in Fig. 1A, are generated. These first dots 11 have a dot size of 2x2 microdots. Then, these first dots 11 grow: the microdot with number 2 is turned on, then the microdot with number 3, then number 4, etc. After adding the microdot with number 11, both first dots 11 now have a size of 3x3 dots, and two 3x3 holes remain, in the upper right and the lower left quadrants of the 9x9 square. The size of these holes is gradually decreased, by turning on the microdot with number 12, then 13, and so on, until number 21. Now two holes 15 with size 2x2 microdots remain. By adding the four microdots with number 22, and then the four microdots with number 23, all the microdots are turned on, so that a density of 100 % is reached.

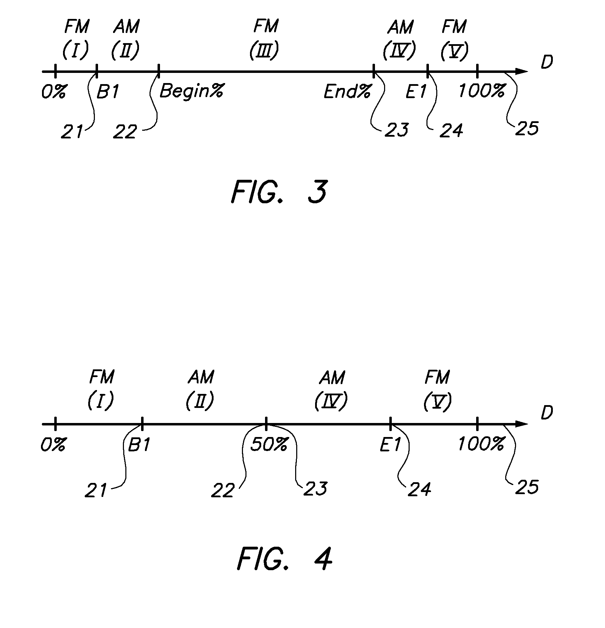

Preferably, a given number of first dots are generated, so that a predetermined density is reached, before the dots start to grow. This can be realized by the following algorithm, that is illustrated by Fig. 3 showing values along a density axis D:
I) for low densities, a number of first dots having a size of BeginSize x BeginSize microdots (e.g. 2x2 if BeginSize = 2) are generated, until Begin% of all dots are generated (i.e. of the remaining (100 % - Begin%) dots, no microdots are yet turned on). If these first dots are generated in a threshold mask array having a parcel size of EndSize x EndSize (e.g. 3x3), then a density of B1 = (BeginSize²/EndSize²)*Begin% is reached when all Begin% dots are turned on. This density B1 is indicated in Fig. 3 by co-ordinate 21 along density axis 25. Thus, in interval (I) of the density axis 25, i.e. from 0 % to B1 %, FM screening is applied;
II) then, in a second step, the first dots gradually grow from BeginSize x BeginSize microdots to EndSize x EndSize microdots. Preferably, one microdot is added to each first dot, then a second microdot is added to each first dot, and so on, as discussed above in connection with Fig. 2, until all first dots have a size of EndSize x EndSize microdots. When all first dots have this size, density is Begin%, indicated by co-ordinate 22 along density axis 25. This second step, in which AM screening is applied, corresponds to interval (II) along density axis 25;
III) subsequently, additional dots are added that have a size of EndSize x EndSize microdots (i.e. the second dot size, as called in Figs. 1A - 1F; remark: in Figs. 1A - 1F, no such additional dots were added). This is again FM screening, corresponding to interval (III) in Fig. 3. This step ends when End% of the dots are turned on. The density is now End%, which is indicated by co-ordinate 23 along density axis 25;
IV) then, the hole size is decreased from EndSize x EndSize to BeginSize x BeginSize microdots. Density increases to E1 = 100 - (100 - End%)x(BeginSize²/EndSize²), indicated by co-ordinate 24 along density axis 25, when all holes have a size of BeginSize x BeginSize microdots. In this step of the algorithm, AM screening is applied; the corresponding density interval is interval (IV);
V) in the final step, which is FM again and corresponds to density interval (V), the holes are removed. Density increases from E1 to 100 %.

In the algorithm as set out above, the dots are square. The algorithm can however easily be generalized to rectangular dots, by replacing the parameter BeginSize by two different parameters, BeginSize1 and BeginSize2, and by replacing EndSize by EndSizel and EndSize2.

If End% = 100 - Begin%, the algorithm is symmetrical with respect to dots and holes. An example is Begin% = 25 % and End% = 75 %. For BeginSize = 2 and EndSize = 3, this results in B1 = 11 % (meaning that dots start to grow at 11 % density) and E1 = 89 %.

Fig. 4 illustrates how density varies for the embodiment discussed already above in connection with Figs. 1A - 1F. In this case, Begin% = End% = 50 %, so that there is no interval (III) in Fig. 4. For BeginSize = 2 and EndSize = 3, dot growth starts at B1 = 22 %, and E1 = 78 %.

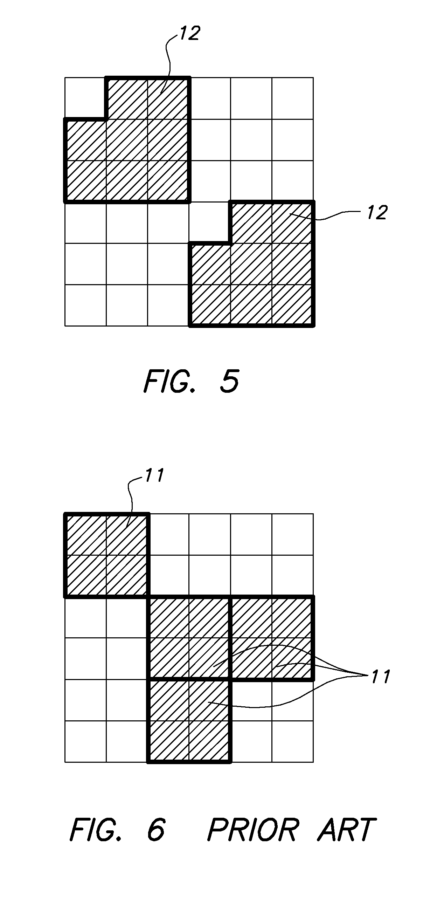

An advantage of a method in accordance with the invention is that clustering of dots in the midtones is more controllable, which results in a higher perceived quality of the printed image in the midtones. This is illustrated by the simplified example of Figs. 5 and 6. Fig. 5 shows "grown" dots 12 of an embodiment in accordance with the invention. The density is 44 % (44 % = (16/36)*100 %; 16 of the 36 microdots are turned on in Fig. 5). The same density can also be obtained, by a prior art method as shown in Fig. 6, by turning on four dots of 2*2 microdots (so that also 16 of the 36 microdots are turned on). Since, especially when using a Bayer matrix, the 2*2 dots are initially positioned far away from each other, but not according to a regular pattern, it becomes difficult, in the midtones, to add new dots, and the new dots often lead to uncontrolled clustering, as illustrated in Fig. 6.

Another advantage of the invention is that, depending on the design of the writing heads of some imagers, some severe banding is avoided. E.g. when interlaced imaging is used, in known FM screens that make use of a single dot size very often a disturbing pattern is observed. Using a screen in accordance with the invention may then solve this problem.

Yet another advantage of the invention is that a higher screen stability is combined with good reproduction of fine details in the highlights and shadows. In the midtones, larger dots are used (e.g. 3x3 instead of 2x2) which is more stable in the imagesetter (or platesetter) and in the pressroom. The smaller dots in the highlights, and the smaller holes in the shadows, result in better reproduction of fine details.

The invention can advantageously be used for computer-to-plate packaging applications.

The invention also includes a printing plate and a printing plate precursor made by a method in accordance with the invention. A printing plate precursor is an imaging material that can be used as a printing plate after one or more treatment steps, that generally include image-wise exposure and processing. Such a printing plate precursor is exposed according to a screened representation in accordance with the invention. A printing plate precursor or a printing plate in accordance with the invention has ink-accepting areas and non-ink-accepting areas that correspond to a screened representation in accordance with the invention.

Those skilled in the art will appreciate that numerous modifications and variations may be made to the embodiments disclosed above without departing from the scope of the present invention.

### List of reference signs

- 11 :: first dot
- 12 :: second dot
- 13 :: microdot
- 14 :: hole
- 15 :: hole
- 18 :: line
- 21 :: co-ordinate
- 22 :: co-ordinate
- 23 :: co-ordinate
- 24 :: co-ordinate
- 25 :: axis

## Claims

1. A method for generating a screened representation of an image for printing said image, the method comprising the steps of:
- generating a first dot (11) of said screened representation, wherein said first dot (11) has a first dot size of at least two microdots;
- repeating said dot generation until a first number of said first dots (11) are generated, wherein said first dots (11) are arranged in a frequency modulated pattern;
**characterized in that** the method further comprises the steps of:
- selecting a second number of second dots (12) out of said first dots (11), wherein said second number is at most equal to said first number and larger than zero;
- enlarging said second dots (12) by adding at least one microdot (13) to each of said second dots (12).

2. The method according to claim 1 further comprising the steps of:
- using a number, at most equal to said first number, of dots having said first dot size for reproducing portions of said image having densities at most equal to a predetermined density;
- using said enlarged second dots (12) for reproducing other portions of said image having densities larger than said predetermined density.

3. The method according to any one of the preceding claims further comprising the steps of:
- generating a threshold mask array for said frequency modulated pattern;
- subdividing said threshold mask array into a plurality of parcels wherein each of said parcels has a parcel size larger than said first dot size.

4. The method according to claim 3 further comprising the step of:
- enlarging said second dots (12) from said first dot size to a second dot size equal to said parcel size.

5. The method according to claim 4 further comprising the step of:
- generating additional dots having said second dot size.

6. The method according to any one of the preceding claims further comprising the step of:
- exposing a printing plate precursor according to said screened representation of said image.

7. A printing plate obtained by the method according to claim 6.

8. A data processing system comprising means for carrying out the steps of the method according to any one of claims 1 to 5.

9. A computer program comprising computer program code means adapted to perform the method according to any one of claims 1 to 5 when said program is run on a computer.

10. A computer readable medium comprising program code adapted to carry out the method according to any one of claims 1 to 5 when run on a computer.
